# FASCICULE DE BREVET EUROPEEN

(11) **EP 2 885 198 B1**
(45) Date de publication et mention de la délivrance du brevet: **10.08.2016**
(21) Numéro de dépôt: 13731397.9
(22) Date de dépôt: 07.06.2013
(51) Int. Cl.: B62D 43/10

(54) **BAC DE RÉCEPTION DE ROUE DE SECOURS À MULTI-POSITIONS, CHÂSSIS, VÉHICULE ET PROCÉDÉ DE FABRICATION D'UN VÉHICULE ASSOCIÉS**
AUFNAHMEBEHÄLTER FÜR EIN ERSATZRAD MIT MEHREREN POSITIONEN UND ENTSPRECHENDES FAHRGESTELL, FAHRZEUG UND VERFAHREN ZUR HERSTELLUNG EINES FAHRZEUGES
RECEIVING CONTAINER FOR A SPARE WHEEL HAVING MULTIPLE POSITIONS, AND ASSOCIATED CHASSIS, VEHICLE AND METHOD FOR MANUFACTURING A VEHICLE

(30) Priorité: 17.08.2012 FR 1257849
(43) Date de publication de la demande: 24.06.2015
(73) Titulaire: Renault S.A.S., 92100 Boulogne-Billancourt (FR)
(72) Inventeur: TABUTEAU, Pascal, F-78180 Montigny le Bretonneux (FR); FARGEAS, Nicolas, F-28410 Serville (FR); BANNIER, Nathalie, F-78860 Saint Nom La Breteche (FR)
(86) Numéro de dépôt international: PCT/FR2013/051324
(87) Numéro de publication internationale: WO 2014/027151

(56) Documents cités:
- EP-A2- 1 612 127
- DE-A1- 10 342 343
- DE-C1- 3 430 826
- JP-A- 4 293 686
- JP-A- 2010 030 563

## Description

### Domaine technique de l'invention

L'invention concerne le domaine des véhicules automobiles.

L'invention a pour objet plus particulièrement un bac de réception d'une roue de secours de véhicule automobile, ledit bac comprenant un premier élément de positionnement d'une première roue de secours.

### État de la technique

Un bac de réception de roue de secours est une partie intégrante d'un véhicule automobile, et forme typiquement au moins en partie un plancher arrière de véhicule. Les véhicules ayant différentes dimensions et présentant des problèmes d'intégration du bac de réception par rapport au reste de la structure du châssis du véhicule, pour chaque type de véhicule correspond une référence particulière de bac de réception. Cette situation provoque des problématiques quant à la gestion des stocks de pièces détachées en usine ou en concession.

Les demandes de brevet DE102004036390 et DE10342343 illustrent un bac de réception de roue de secours équipé de ladite roue de secours. Le document JP 04 293686 A décrit un bac de réception d'une roue de secours selon le préambule de la revendication 1.

### Objet de l'invention

Le but de la présente invention est de proposer une solution remédiant notamment aux problèmes évoqués dans l'art antérieur.

On tend vers ce but notamment en ce que le bac de réception d'une roue de secours destiné à faire partie d'un véhicule automobile comprend un premier élément de positionnement d'une première roue de secours, par exemple d'un premier type de véhicule, à un premier emplacement du bac de réception, et un deuxième élément de positionnent d'une deuxième roue de secours, par exemple d'un deuxième type de véhicule, à un deuxième emplacement du bac de réception, le bac de réception comportant une première configuration dans laquelle il est adapté au premier type de véhicule et une seconde configuration dans laquelle il est adapté au deuxième type de véhicule par une ablation d'une portion dudit bac de réception comprenant au moins une partie du premier élément de positionnement, de sorte à inhiber le positionnement de la première roue dans le premier emplacement du bac de réception une fois ce dernier assemblé au deuxième type de véhicule.

Selon une mise en oeuvre, les premier et deuxième éléments de positionnement sont inclus dans des plans différents et normaux à un axe Z sensiblement vertical une fois le bac assemblé au véhicule, et lesdits premier et deuxième éléments de positionnement sont décalés l'un par rapport à l'autre le long d'un axe X sensiblement horizontal une fois le bac assemblé au véhicule.

Le premier élément de positionnement peut comporter une première empreinte, au moins partielle, de la première roue, et le deuxième élément de positionnement comporte une deuxième empreinte, au moins partielle, de la deuxième roue, les première et deuxième empreintes formant un renfoncement d'une première face du bac de réception à deux niveaux de profondeur différents.

Avantageusement, les première et deuxième empreintes forment en correspondance avec le renfoncement une élévation à deux niveaux différents d'une seconde face du bac de réception opposée à la première face.

De préférence, dans la seconde configuration, lorsque la deuxième roue de secours est en place dans la deuxième empreinte, le bac de réception présente un espace libre situé entre ladite deuxième roue de secours et le fond du bac de réception délimité au moins en partie par la première empreinte.

De préférence, dans la première configuration, lorsque la première roue de secours est en place dans la première empreinte, le bac de réception présente un espace libre au-dessus de la première roue et/ou entre la première roue et la deuxième empreinte.

Le bac de réception peut comporter un organe d'entretoisement disposé dans l'espace libre et s'étendant à partir de la première empreinte de sorte à maintenir la deuxième roue dans la deuxième empreinte.

L'invention est aussi relative à un châssis de véhicule automobile dont une partie est formée par un bac de réception tel que décrit.

L'invention est aussi relative à un véhicule comportant un bac de réception tel que décrit, ou un châssis tel que décrit.

Avantageusement, le véhicule comprend un essieu arrière muni d'une traverse, et le bac de réception est monté de sorte à passer au-dessus de la traverse, le deuxième élément de positionnement étant disposé au moins en partie au droit de la traverse et le premier élément de positionnement étant situé en arrière de la traverse de l'essieu.

De préférence, le premier élément de positionnement est plus proche du sol que le deuxième élément de positionnement.

L'invention est aussi relative à un procédé de fabrication d'un véhicule tel que décrit comportant les étapes suivantes :
- Prévoir un bac de réception,
- Prévoir un élément de structure comprenant un châssis au moins partiel de véhicule,
- Identifier, à partir de l'élément de structure, un type de véhicule choisi parmi au moins le premier véhicule ou le deuxième véhicule,
- Monter le bac de réception sur l'élément de structure, par exemple pour compléter le châssis, avec ablation d'au moins une partie du premier élément de positionnement en cas de détection d'un type de véhicule correspondant au deuxième véhicule, afin de limiter une dimension longitudinale du véhicule.

Avantageusement, le procédé comporte une étape de montage du bac de réception sur l'élément de structure sans préjudice au premier élément de positionnement en cas de détection d'un type de véhicule correspondant au premier véhicule, afin de maximiser la dimension longitudinale du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un bac de réception de roue de secours selon l'invention,
- la figure 2 est une vue en coupe selon un plan de coupe parallèle aux axes X et Z de la figure 1, dans une configuration du bac de réception,
- la figure 3 est une vue en coupe selon un plan de coupe parallèle aux axes X et Z de la figure 1, dans une autre configuration du bac de réception,
- la figure 4 est une vue en perspective d'un bac de réception représentant les deux configurations des figures 2 et 3,
- les figures 5 et 6 illustrent des vues en coupe d'un arrière de véhicule équipé des bacs de réception respectivement selon la première configuration et la deuxième configuration.

### Description de modes préférentiels de l'invention

Le bac de réception décrit ci-après diffère de l'art antérieur notamment en ce qu'il est apte à réceptionner une roue de secours à au moins deux emplacements distincts. Autrement dit, il est compatible avec moins deux types de véhicules.

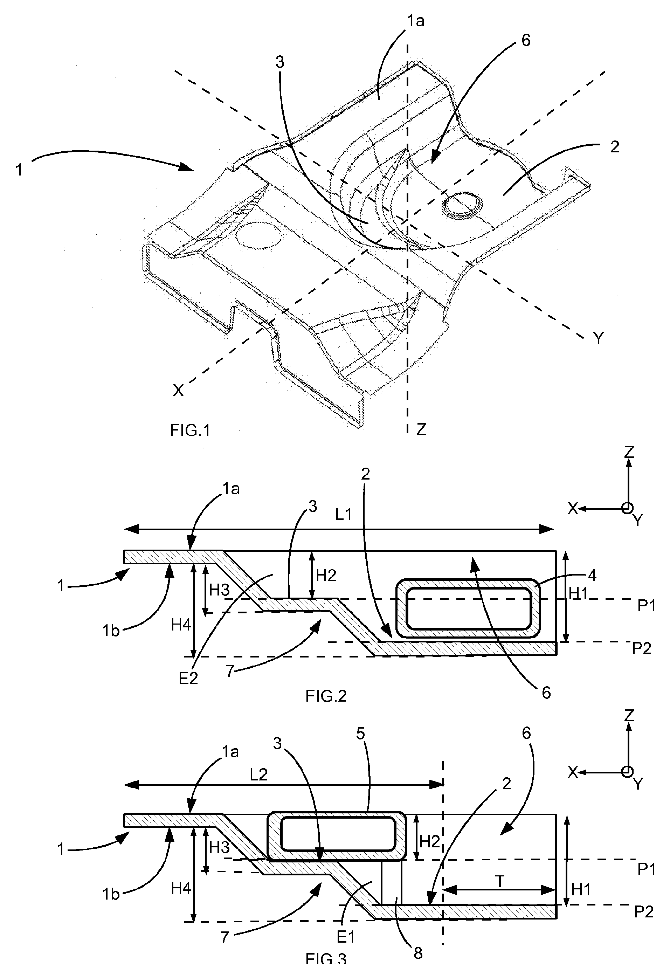

Dans la présente description, un axe selon X représente un axe passant par l'avant et l'arrière d'un véhicule et sensiblement horizontal, un axe selon Y représente un axe transversal au véhicule sensiblement horizontal et sensiblement perpendiculaire à l'axe X, et un axe selon Z est un axe sensiblement vertical. Autrement dit, un repère orthonormé X, Y, Z constitue le référentiel d'un véhicule automobile. Les axes ou le repère X, Y et Z sont reportés aux figures 1 à 6 pour illustrer le positionnement d'un bac de réception par rapport à un véhicule.

Par sensiblement, on entend exactement ou formant un angle à plus ou moins quelques degrés (comme par exemple plus ou moins 5 degrés).

Sur la figure 1, le bac de réception 1 d'une roue de secours destiné à faire partie d'un véhicule automobile comprend un premier élément de positionnement 2 d'une première roue de secours, par exemple d'un premier type de véhicule, à un premier emplacement du bac de réception 1, et un deuxième élément de positionnent 3 d'une deuxième roue de secours, par exemple d'un deuxième type de véhicule, à un deuxième emplacement du bac de réception 1.

Un tel bac de réception est destiné à faire partie d'un châssis de véhicule automobile.

L'utilisation au sein d'un même bac de réception de deux éléments de positionnement 2, 3 permet d'utiliser ce dernier par exemple sur deux types de véhicules de forme différente. Ces deux types de véhicules peuvent être équipés du même type de roue ou d'un type différent. Autrement dit, les première et deuxième roues peuvent être identiques ou non.

Selon une mise en oeuvre illustrée aux figures 2 à 4, le premier élément de positionnement 2 et le deuxième élément de positionnement 3 sont inclus dans des plans P1 et P2 différents et normaux à un axe Z sensiblement vertical une fois le bac assemblé au véhicule. En outre, le premier élément de positionnement 2 et le deuxième élément de positionnement 3 sont décalés l'un par rapport à l'autre le long d'un axe X sensiblement horizontal une fois le bac assemblé au véhicule. De manière générale, le deuxième élément de positionnement 3 sera destiné à être disposé de manière proximale à l'avant du véhicule.

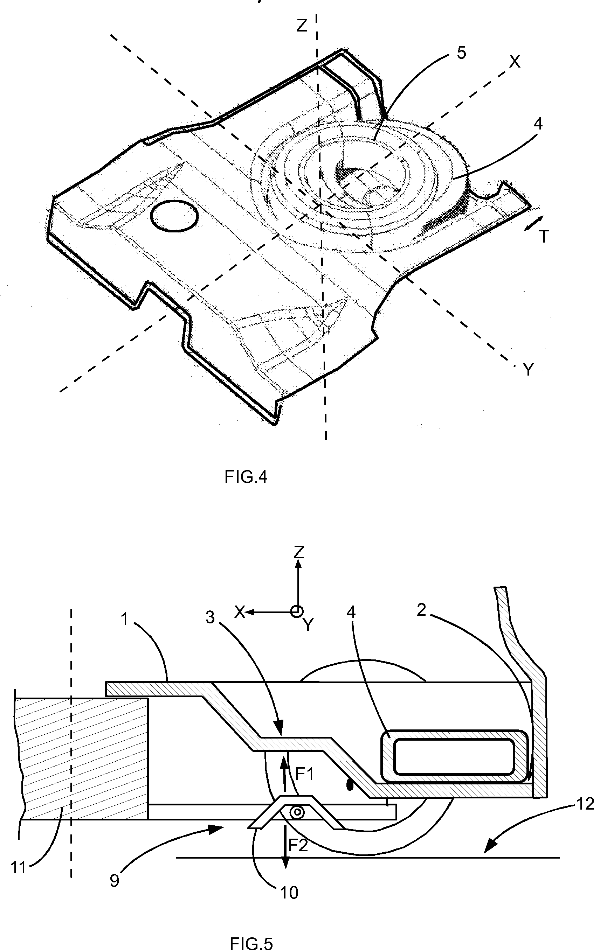

Aux figures 2 et 4, la première roue de secours 4 coopère avec le premier élément de positionnement 2 et aux figures 3 et 4 la deuxième roue de secours 5 coopère avec le deuxième élément de positionnement 3.

Selon l'invention, le bac de réception 1 des figures 1 à 4 comporte une première configuration dans laquelle il est adapté au premier type de véhicule (figure 2), et une seconde configuration dans laquelle il est adapté au deuxième type de véhicule par une ablation d'une portion T (figures 3 et 4) dudit bac de réception comprenant au moins une partie du premier élément de positionnement 2 de sorte à inhiber le positionnement de la première roue dans le premier emplacement du bac de réception 1 une fois ce dernier assemblé au deuxième type de véhicule.

En fait, cette ablation de portion T dépend du type de véhicule. Dans le cas où le bac de réception est destiné à participer à la délimitation du coffre, la première configuration de la figure 2 permet d'avoir un coffre assez long selon l'axe X du véhicule. Cette longueur de coffre est indiquée par la référence L1. Par ailleurs, le deuxième type de véhicule sera considéré comme un véhicule à coffre court de longueur L2 selon l'axe longitudinal X du véhicule.

Selon une mise en oeuvre, le premier élément de positionnement 2 comporte une première empreinte, au moins partielle, de la première roue 4, et le deuxième élément de positionnement 3 comporte une deuxième empreinte, au moins partielle, de la deuxième roue 5. Les première et deuxième empreintes forment un renfoncement 6 d'une première face 1a du bac de réception à deux niveaux de profondeur différents H1 et H2. Sur les figures 2 et 3, la profondeur H1 est associée à l'empreinte de la première roue 4 et la profondeur H2 à l'empreinte de la deuxième roue 5. Dans l'exemple des figures 1 et 2, la première empreinte est totale alors que la deuxième empreinte n'est que partielle. Par renfoncement 6 on entend une cavité du bac de réception, cette cavité permettant la réception d'une roue.

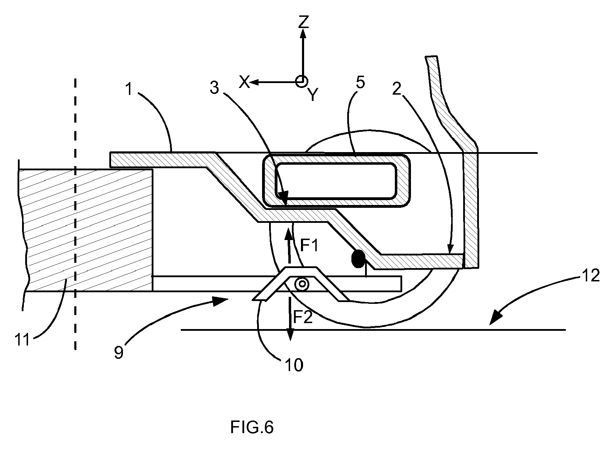

Avantageusement, les première et deuxième empreintes forment en correspondance avec le renfoncement 6 une élévation 7 à deux niveaux différents H3, H4 d'une seconde face 1b du bac de réception opposée à la première face 1a. Cette élévation propose donc une hauteur H3 sensiblement égale à H2 et une hauteur H4 sensiblement égale à H1. Cette conformation particulière permet le passage d'une traverse d'un essieu par exemple monté mobile sur le châssis au niveau du deuxième élément de positionnement 3 (figures 5 et 6). Un essieu à traverse est aussi connu dans le domaine sous le nom d'essieu semi-rigide, par exemple en T.

Sur la figure 2, dans la première configuration, lorsque la première roue 4 de secours est en place dans la première empreinte 2, le bac de réception 1 présente un espace libre E2 au-dessus de la première roue 4 et/ou entre la première roue 4 et la deuxième empreinte 3.

Sur la figure 3, dans la seconde configuration, lorsque la deuxième roue 5 de secours est en place dans la deuxième empreinte 3, le bac de réception 1 présente un espace libre E1 situé entre ladite deuxième roue de secours 5 et le fond du bac de réception 1 délimité au moins en partie par la première empreinte 2. En outre, le bac de réception 1 peut comporter un organe d'entretoisement 8 disposé dans l'espace libre E1 et s'étendant à partir de la première empreinte 2 de sorte à maintenir la deuxième roue 5 dans la deuxième empreinte 3. Ainsi, même si la deuxième empreinte 3 n'est que partielle, l'organe d'entretoisement 8 empêche le basculement de la deuxième roue de secours 5 dans l'espace libre E1. Cet organe d'entretoisement 8 peut combler tout ou partie de l'espace libre. Dans le cas où l'organe d'entretoisement 8 ne comble pas tout l'espace libre, le reste de l'espace libre E1 forme un espace de rangement.

De manière générale, l'espace libre E1 ou E2 peut être un espace de rangement. Ceci permet d'améliorer le volume de rangement d'un véhicule.

Un châssis de véhicule automobile peut être en partie formé par un bac de réception tel que décrit. Dans ce cas, le bac de réception est partie intégrante du châssis.

Ainsi, de manière générale, un véhicule peut comporter un bac de réception tel que décrit, ou un châssis dont une partie est formée par un bac de réception tel que décrit.

Les figures 5 et 6 illustrent le bac de réception 1 assemblé à un véhicule automobile selon les deux configurations décrites ci-avant.

En fait, un véhicule peut comporter un essieu arrière 9 muni d'une traverse 10. Le bac de réception 1 est monté de sorte à passer au-dessus de la traverse 10. Le deuxième élément de positionnement 3 est disposé au moins en partie au droit de la traverse 10 et le premier élément de positionnement 2 est situé en arrière de la traverse 10 de l'essieu 9.

En fait, on distinguera ici deux cas, soit le bac de réception 1 fait partie du châssis 11 et dans ce cas il est monté de manière idoine par fixation au reste du châssis 11, soit le bac de réception 1 est distinct du châssis et on dira qu'il est monté sur le châssis 11.

Avantageusement, le premier élément de positionnement 2 est plus proche du sol 12 que le deuxième élément de positionnement 3. Ceci permet à la traverse 10, lors de l'absorption de chocs de roulage de se déplacer dans les directions F1 ou F2, sensiblement parallèles à l'axe Z du véhicule sans venir taper le bac de réception 1. On comprend alors ici le rôle de l'élévation à deux niveaux décrite ci-avant. Dans ce cas l'élévation s'étend en direction du sol 12. Ceci est notamment dû au fait que l'essieu est classiquement monté mobile sur le châssis 11.

Le bac de réception 1 peut alors servir de partie de plancher arrière commun à deux types différents de véhicules. A la figure 5, le volume de coffre est optimisé et il est possible de rabaisser le reste du plancher arrière. On comprend des figures 5 et 6, que dans la première configuration, la roue 4 est plus proche du sol que la roue 5 de la deuxième configuration.

Généralement, le bac de réception de roue de secours est installé de telle sorte que la cavité délimitée par le renfoncement 6 laisse accessible la roue par le coffre, ladite roue étant généralement cachée sous un tapis rigide ou souple.

On comprend de ce qui a été dit avant qu'un même bac de réception pourra être utilisé pour réaliser deux modèles de véhicule dont les dimensions, notamment en niveau du coffre arrière sont différentes. Dès lors un procédé de fabrication d'un véhicule peut comporter les étapes suivantes : prévoir un bac de réception tel que décrit ; prévoir un élément de structure comprenant un châssis au moins partiel de véhicule ; identifier, à partir de l'élément de structure, un type de véhicule choisi parmi au moins le premier véhicule ou le deuxième véhicule ; monter le bac de réception sur l'élément de structure, par exemple pour compléter le châssis, avec ablation d'au moins une partie du premier élément de positionnement en cas de détection d'un type de véhicule correspondant au deuxième véhicule, afin de limiter une dimension longitudinale du véhicule.

En outre, le procédé peut comporter une étape de montage du bac de réception sur l'élément de structure sans préjudice au premier élément de positionnement en cas de détection d'un type de véhicule correspondant au premier véhicule, afin de maximiser la dimension longitudinale du véhicule. Par « sans préjudice », on entend que la fonction du bac de réception ne sera pas altérée nonobstant des modifications structurelles mineures comme la réalisation de trous, la pose de rivet, etc.

Lors de l'ablation de la partie du premier élément de positionnement qui correspond en fait à l'ablation de la portion T décrite ci-avant, il est aussi possible de relever le bord du bac de réception de sorte à former un rebord sensiblement vertical favorisant l'assemblage d'une pièce telle que le bas de porte de coffre audit rebord.

Un support d'enregistrement de données lisible par un calculateur, sur lequel est enregistré un programme informatique peut comprendre des moyens de codes de programme informatique de mise en oeuvre des étapes d'un tel procédé.

Un programme informatique peut comprendre un moyen de codes de programme informatique adapté à la réalisation des étapes d'un procédé tel que décrit, lorsque le programme est exécuté par un calculateur.

## Revendications

1. Bac de réception (1) d'une roue de secours destiné à faire partie d'un véhicule automobile, ledit bac (1) comprenant un premier élément de positionnement (2) d'une première roue de secours (4) d'un premier type de véhicule à un premier emplacement du bac de réception (1), et un deuxième élément de positionnement (3) d'une deuxième roue de secours (5) d'un deuxième type de véhicule à un deuxième emplacement du bac de réception (1), **caractérisé en ce qu'**il comporte une première configuration dans laquelle il est adapté au premier type de véhicule, **et en ce qu'il** comporte une seconde configuration dans laquelle il est adapté au deuxième type de véhicule par une ablation d'une portion (T) dudit bac de réception (1) comprenant au moins une partie du premier élément de positionnement (2), de sorte à inhiber le positionnement de la première roue (4) dans le premier emplacement du bac de réception (1) une fois ce dernier assemblé au deuxième type de véhicule.

2. Bac de réception selon la revendication 1, **caractérisé en ce que** les premier et deuxième éléments de positionnement (2, 3) sont inclus dans des plans (P1, P2) différents et normaux à un axe Z sensiblement vertical une fois le bac (1) assemblé au véhicule, **et en ce que** lesdits premier et deuxième éléments de positionnement (2, 3) sont décalés l'un par rapport à l'autre le long d'un axe X sensiblement horizontal une fois le bac (1) assemblé au véhicule.

3. Bac de réception selon l'une quelconque des revendications précédentes, **caractérisé en ce que** le premier élément de positionnement (2) comporte une première empreinte, au moins partielle, de la première roue (4), et le deuxième élément de positionnement (3) comporte une deuxième empreinte, au moins partielle, de la deuxième roue (5), les première et deuxième empreintes formant un renfoncement (6) d'une première face (1a) du bac de réception (1) à deux niveaux de profondeur (H1, H2) différents.

4. Bac de réception selon la revendication 3, **caractérisé en ce que** les première et deuxième empreintes forment en correspondance avec le renfoncement (6) une élévation (7) à deux niveaux différents (H3, H4) d'une seconde face (1b) du bac de réception (1) opposée à la première face (1a).

5. Bac de réception selon l'une des revendications 3 ou 4, **caractérisé en ce que,** dans la seconde configuration, lorsque la deuxième roue de secours (5) est en place dans la deuxième empreinte (3), le bac de réception (1) présente un espace libre (E1) situé entre ladite deuxième roue de secours (5) et le fond du bac de réception (1) délimité au moins en partie par la première empreinte (2).

6. Bac de réception selon l'une des revendications 3 ou 4, **caractérisé en ce que,** dans la première configuration, lorsque la première roue de secours (4) est en place dans la première empreinte (2), le bac de réception (1) présente un espace libre (E2) au-dessus de la première roue (4) et/ou entre la première roue (4) et la deuxième empreinte (3).

7. Bac de réception selon la revendication 5, **caractérisé en ce qu'il** comporte un organe d'entretoisement (8) disposé dans l'espace libre (E1) et s'étendant à partir de la première empreinte (2) de sorte à maintenir la deuxième roue (5) dans la deuxième empreinte (3).

8. Châssis de véhicule automobile dont une partie est formée par un bac de réception (1) selon l'une quelconque des revendications précédentes.

9. Véhicule comportant un bac de réception selon l'une quelconque des revendications 1 à 7, ou un châssis selon la revendication 8.

10. Véhicule selon la revendication 9, **caractérisé en ce qu'il** comprend un essieu arrière (9) muni d'une traverse (10), **et en ce que** le bac de réception (1) est monté de sorte à passer au-dessus de la traverse (10), le deuxième élément de positionnement (3) étant disposé au moins en partie au droit de la traverse (10) et le premier élément de positionnement (2) étant situé en arrière de la traverse (10) de l'essieu (9).

11. Véhicule selon la revendication précédente, **caractérisé en ce que** le premier élément de positionnement (2) est plus proche du sol que le deuxième élément de positionnement (3).

12. Procédé de fabrication d'un véhicule selon la revendication 9, **caractérisé en ce qu'**il comporte les étapes suivantes :
- Prévoir un bac de réception (1) selon l'une quelconque des revendications 1 à 7,
- Prévoir un élément de structure comprenant un châssis (11) au moins partiel de véhicule,
- Identifier, à partir de l'élément de structure, un type de véhicule choisi parmi au moins le premier véhicule ou le deuxième véhicule,
- Monter le bac de réception (1) sur l'élément de structure, par exemple pour compléter le châssis, avec ablation d'au moins une partie du premier élément de positionnement (2) en cas de détection d'un type de véhicule correspondant au deuxième véhicule, afin de limiter une dimension longitudinale du véhicule.

13. Procédé selon la revendication 13, **caractérisé en ce qu'il** comporte une étape de montage du bac de réception (1) sur l'élément de structure sans préjudice au premier élément de positionnement (2) en cas de détection d'un type de véhicule correspondant au premier véhicule, afin de maximiser la dimension longitudinale du véhicule.

## Patentansprüche

1. Aufnahmewanne (1) für ein Reserverad, die dazu bestimmt ist, Teil eines Kraftfahrzeugs zu sein, wobei die Wanne (1) ein erstes Positionierelement (2) eines ersten Reserverads (4) eines ersten Fahrzeugtyps an einer ersten Stelle der Aufnahmewanne (1) und ein zweites Positionierelement (3) eines zweiten Reserverads (5) eines zweiten Fahrzeugtyps an einer zweiten Stelle der Aufnahmewanne (1) enthält, **dadurch gekennzeichnet, dass** sie eine erste Konfiguration aufweist, in der sie für den ersten Fahrzeugtyp geeignet ist, und dass sie eine zweite Konfiguration aufweist, in der sie für den zweiten Fahrzeugtyp geeignet ist, durch eine Entfernung eines Abschnitts (T) der Aufnahmewanne (1), der mindestens einen Teil des ersten Positionierelements (2) enthält, um die Positionierung des ersten Rads (4) an der ersten Stelle der Aufnahmewanne (1) zu verhindern, wenn letztere in den zweiten Fahrzeugtyp eingebaut ist.

2. Aufnahmewanne nach Anspruch 1, **dadurch gekennzeichnet, dass** die ersten und zweiten Positionierelemente (2, 3) in unterschiedlichen Ebenen (P1, P2) normal zu einer im Wesentlichen senkrechten Achse Z enthalten sind, wenn die Wanne (1) in das Fahrzeug eingebaut ist, und dass die ersten und zweiten Positionierelemente (2, 3) entlang einer im Wesentlichen waagrechten Achse X zueinander versetzt sind, wenn die Wanne (1) in das Fahrzeug eingebaut ist.

3. Aufnahmewanne nach einem der vorhergehenden Ansprüche, **dadurch gekennzeichnet, dass** das erste Positionierelement (2) eine erste zumindest teilweise Mulde des ersten Rads (4) aufweist, und das zweite Positionierelement (3) eine zweite zumindest teilweise Mulde des zweiten Rads (5) aufweist, wobei die erste und die zweite Mulde eine Vertiefung (6) einer ersten Seite (1a) der Aufnahmewanne (1) auf zwei unterschiedlichen Tiefen (H1, H2) formen.

4. Aufnahmewanne nach Anspruch 3, **dadurch gekennzeichnet, dass** die erste und die zweite Mulde in Übereinstimmung mit der Vertiefung (6) eine Erhöhung (7) auf zwei unterschiedliche Ebenen (H3, H4) einer zweiten Seite (1b) der Aufnahmewanne (1) entgegengesetzt zur ersten Seite (1a) formen.

5. Aufnahmewanne nach einem der Ansprüche 3 oder 4, **dadurch gekennzeichnet, dass** in der zweiten Konfiguration, wenn das zweite Reserverad (5) in der zweiten Mulde (3) angeordnet ist, die Aufnahmewanne (1) einen zwischen dem zweiten Reserverad (5) und dem Boden der Aufnahmewanne (1) befindlichen Freiraum (E1) aufweist, der zumindest zum Teil durch die erste Mulde (2) begrenzt wird.

6. Aufnahmewanne nach einem der Ansprüche 3 oder 4, **dadurch gekennzeichnet, dass** in der ersten Konfiguration, wenn das erste Reserverad (4) in der ersten Mulde (2) angeordnet ist, die Aufnahmewanne (1) einen Freiraum (E2) oberhalb des ersten Rads (4) und/oder zwischen dem ersten Rad (4) und der zweiten Mulde (3) aufweist.

7. Aufnahmewanne nach Anspruch 5, **dadurch gekennzeichnet, dass** sie ein Abstandselement (8) aufweist, das im Freiraum (E1) angeordnet ist und sich ausgehend von der ersten Mulde (2) erstreckt, um das zweite Rad (5) in der zweiten Mulde (3) zu halten.

8. Kraftfahrzeug-Fahrgestell, von dem ein Teil von einer Aufnahmewanne (1) nach einem der vorhergehenden Ansprüche gebildet wird.

9. Fahrzeug, das eine Aufnahmewanne nach einem der Ansprüche 1 bis 7 oder ein Fahrgestell nach Anspruch 8 aufweist.

10. Fahrzeug nach Anspruch 9, **dadurch gekennzeichnet, dass** es eine mit einem Querträger (10) versehene Hinterachse (9) aufweist, und dass die Aufnahmewanne (1) so montiert ist, dass sie über dem Querträger (10) liegt, wobei das zweite Positionierelement (3) mindestens zum Teil vor dem Querträger (10) angeordnet ist, und das erste Positionierelement (2) sich hinter dem Querträger (10) der Achse (9) befindet.

11. Fahrzeug nach dem vorhergehenden Anspruch, **dadurch gekennzeichnet, dass** das erste Positionierelement (2) dem Boden näher ist als das zweite Positionierelement (3).

12. Verfahren zur Herstellung eines Fahrzeugs nach Anspruch 9, **dadurch gekennzeichnet, dass** es die folgenden Schritte aufweist:
- Vorsehen einer Aufnahmewanne (1) nach einem der Ansprüche 1 bis 7,
- Vorsehen eines Strukturelements, das ein zumindest teilweises Fahrgestell (11) eines Fahrzeugs enthält,
- Erkennen, ausgehend vom Strukturelement, eines Fahrzeugtyps, der unter mindestens dem ersten Fahrzeug oder dem zweiten Fahrzeug ausgewählt wird,
- Montieren der Aufnahmewanne (1) auf das Strukturelement, zum Beispiel, um das Fahrgestell zu vervollständigen, mit Entfernen mindestens eines Teils des ersten Positionierelements (2) im Fall der Erfassung eines Fahrzeugtyps entsprechend dem zweiten Fahrzeug, um eine Längsabmessung des Fahrzeugs zu begrenzen.

13. Verfahren nach Anspruch 13, **dadurch gekennzeichnet, dass** es einen Schritt der Montage der Aufnahmewanne (1) auf das Strukturelement ohne Benachteiligung des ersten Positionierelements (2) im Fall einer Erfassung eines dem ersten Fahrzeug entsprechenden Fahrzeugtyps, um die Längsabmessung des Fahrzeug zu maximieren.

## Claims

1. Container (1) for receiving a spare wheel intended to form part of a motor vehicle, said container (1) including a first element (2) for positioning a first spare wheel (4) of a first vehicle type, at a first location of the receiving container (1), and a second element (3) for positioning a second spare wheel (5) of a second vehicle type, at a second location of the receiving container (1),
**characterized in that** it has a first configuration in which it is suitable for the first vehicle type and **in that** it has a second configuration in which it is suitable for the second vehicle type by removal of a portion (T) of said receiving container (1) including at least a part of the first positioning element (2), so as to inhibit the positioning of the first wheel (4) in the first location of the receiving container (1) when the latter has been assembled to the second vehicle type.

2. Receiving container according to Claim 1, **characterized in that** the first and second positioning elements (2, 3) are contained in different planes (P1, P2) normal to a substantially vertical axis Z when the container (1) has been assembled to the vehicle, and **in that** said first and second positioning elements (2, 3) are offset relative to each other along a substantially horizontal axis X when the container (1) has been assembled to the vehicle.

3. Receiving container according to either one of the preceding claims, **characterized in that** the first positioning element (2) includes an at least partial first imprint of the first wheel (4) and the second positioning element (3) includes an at least partial second imprint of the second wheel (5), the first and second imprints forming a step (6) in a first face (1a) of the receiving container (1) at two different depth levels (H1, H2).

4. Receiving container according to Claim 3, **characterized in that** the first and second imprints form in corresponding relationship with the step (6) an elevation (7) with two different levels (H3, H4) of a second face (1b) of the receiving container (1) opposite the first face (1a).

5. Receiving container according to either one of Claims 3 or 4, **characterized in that**, in the second configuration, when the second spare wheel (5) is in place in the second imprint (3), the receiving container (1) includes a free space (E1) situated between said second spare wheel (5) and the bottom of the receiving container (1) delimited at least in part by the first imprint (2).

6. Receiving container according to either one of Claims 3 or 4, **characterized in that**, in the first configuration, when the first spare wheel (4) is in place in the first imprint (2), the receiving container (1) includes a free space (E2) above the first wheel (4) and/or between the first wheel (4) and the second imprint (3).

7. Receiving container according to Claim 5, **characterized in that** it includes a spacer member (8) disposed in the free space (E1) and extending from the first imprint (2) so as to retain the second wheel (5) in the second imprint (3).

8. Automobile vehicle chassis part of which is formed by a receiving container (1) according to any one of the preceding claims.

9. Vehicle including a receiving container according to any one of Claims 1 to 7 or a chassis according to Claim 8.

10. Vehicle according to Claim 9, **characterized in that** it includes a rear axle (9) provided with a crossmember (10), and **in that** the receiving container (1) is mounted so as to extend above the crossmember (10), the second positioning element (3) being disposed at least in part in line with the crossmember (10) and the first positioning element (2) being situated to the rear of the crossmember (10) of the axle (9).

11. Vehicle according to the preceding claim, **characterized in that** the first positioning element (2) is nearer the ground than the second positioning element (3).

12. Method of manufacturing a vehicle according to Claim 9, **characterized in that** it includes the following steps:
- procuring a receiving container (1) according to any one of claims 1 to 7,
- procuring a structural element including an at least partial chassis (11) of the vehicle,
- on the basis of the structural element, identifying a vehicle type chosen from at least the first vehicle or the second vehicle,
- mounting the receiving container (1) on the structural element, for example to complete the chassis, with removal of at least part of the first positioning element (2) in the event of detection of a vehicle type corresponding to the second vehicle, in order to limit a longitudinal dimension of the vehicle.

13. Method according to Claim 13, **characterized in that** it includes a step of mounting the receiving container (1) on the structural element without prejudice to the first positioning element (2) in the event of detection of a vehicle type corresponding to the first vehicle, in order to maximize the longitudinal dimension of the vehicle.
